# EUROPEAN PATENT APPLICATION

(11) **EP 4 772 998 A1**
(43) Date of publication of application: **08.07.2026**
(21) Application number: 25227772.8
(22) Date of filing: 30.12.2025
(51) Int. Cl.: G06F 8/75, G06F 9/445, G06F 9/50, G06N 20/00, G06F 8/60

(54) **SYSTEMS AND METHODS FOR USING SERVERLESS SERVICE OF CLOUD COMPUTING PLATFORMS**

(30) Priority: 06.01.2025 US 202519011565
(71) Applicant: Capital One Services, LLC, McLean, Virginia 22102 (US)
(72) Inventor: MOHSIN, Mohammad, McLean, VA 22102 (US); BEN YEMNA, Fatma, McLean, VA 22102 (US); OMAR, Nour, McLean, VA 22102 (US); JAIN, Gaurav, McLean, VA 22102 (US); BODDAPATI, Siva Karthik, McLean, VA 22102 (US); KHAN, Naimul, McLean, VA 22102 (US); COLE, Ethan, McLean, VA 22102 (US); SIDHARTA, Aditya Kelvianto, McLean, VA 22102 (US)
(74) Representative: Boult Wade Tennant LLP

(57) **Abstract**

A system for improving scalability of machine learning may identify a machine learning libraries that are to be used for an execution of a serverless machine learning process using a serverless service provided by a cloud computing platform; remove a plurality of portions of one or more first libraries, of the machine learning libraries, that are to be pre-loaded into the serverless service; select one or more second libraries, of the machine learning libraries, that are to be dynamically loaded while the serverless machine learning process is executing; determine smart sampling of data to be used for the serverless machine learning process; and cause the execution of the serverless machine learning process by uploading a package that includes the one or more first libraries to the serverless service, causing the one or more second libraries to be dynamically loaded, and using the portion of the data.

## Description

### BACKGROUND

In recent years, the use of artificial intelligence, including, but not limited to, machine learning, deep learning, etc. (referred to collectively herein as artificial intelligence models, machine learning models, or simply models) has exponentially increased. Broadly described, artificial intelligence refers to a wide-ranging branch of computer science concerned with building smart machines capable of performing tasks that typically require human intelligence. Key benefits of artificial intelligence are its ability to process data, find underlying patterns, and/or perform real-time determinations. However, despite these benefits and despite the wide-ranging number of potential applications, practical implementations of artificial intelligence have been hindered by several technical problems. Artificial intelligence may rely on large amounts of code that requires a significant amount of computing power (e.g., processor and memory resources) that can only be provided by setting up dedicated physical computer clusters. This prevents the scalability necessary to improve machine learning and use it for new use cases. These technical problems may present an inherent problem with attempting to use artificial intelligence-based solutions for time series anomaly detection use cases, such as monitoring network systems and detecting potential cyber attacks.

### SUMMARY

Methods and systems are described herein for novel uses and/or improvements to the technical fields of machine learning and executing machine learning models. As one example, methods and systems are described herein for improving scalability of machine learning by facilitating the use of a serverless service (e.g., a serverless Function as a Service (FaaS)) provided by a cloud computing platform, for machine learning that requires a large amount of code (e.g., an amount of code that is above a particular threshold, such as 250 megabytes (mb) for unzipped code / 50 mb for zipped code).

Existing systems fail to provide scalability for machine learning that require the large amount of code. For example, one existing solution requires setting up dedicated, physical computer clusters to provide the necessary computing resources required for the large amount of code. However, this solution is not scalable and wastes resources if the dedicated, physical computer clusters are not permanently and continuously used for a single machine learning application in the same way. Another existing solution is to use the serverless service, provided by the cloud computing platform, to run a machine learning model. However, such serverless services impose limits, including a limit on the size of code that can be deployed to the serverless service for the machine learning model. Therefore, this solution does not support process-intensive machine learning models that require an amount of code that exceeds that size limit. This limits the ability to use artificial intelligence-based solutions for time series anomaly detection use cases, such as monitoring network systems and detecting potential cyber attacks.

To overcome these technical deficiencies in adapting artificial intelligence models for this practical benefit, methods and systems disclosed herein reduce the size of code of machine learning libraries (e.g., Prophet) needed to be preloaded to a serverless service (e.g., Lambda) for serverless machine learning by using 3 interconnected approaches: (1) stripping unnecessary portions from code for a library that is to be preloaded to the serverless service; (2) using dynamic loading to load other libraries if, for example, the stripping of the unnecessary portions is not sufficient to satisfy the size limit; and (3) using smart sampling of data to reduce the impact of dynamic loading increasing runtime above a particular runtime limit (e.g., 15 minutes) of the serverless service. This allows the use of serverless machine learning for machine learning that require large amounts of code, such as time series anomaly detection use cases that are used for monitoring network systems and detecting potential cyber attacks. Accordingly, the methods and systems improve the scalability of machine learning for application to such use cases and reduce wasting processing and storage resources of dedicated, physical computer clusters that would be required if serverless machine learning was not possible.

In some aspects, a system for improving scalability of machine learning comprises one or more memories; and one or more processors, coupled to the one or more processors, configured to cause the system to: identify a plurality of machine learning libraries that are to be used for an execution of a serverless machine learning process using a serverless Function as a Service (FaaS) provided by a cloud computing platform, wherein a zipped size of code of the plurality of machine learning libraries is greater than a maximum zipped size of code allowed to be directly uploaded to the serverless FaaS; remove, based on the zipped size of code of the plurality of machine learning libraries being greater than the maximum zipped size, a plurality of portions of one or more first libraries, of the plurality of machine learning libraries, that are to be pre-loaded into the serverless FaaS, wherein the plurality of portions are not necessary for the execution of the serverless machine learning process; select, based on the zipped size of code of the plurality of machine learning libraries being greater than the maximum zipped size, one or more second libraries, of the plurality of machine learning libraries, that are to be dynamically loaded while the serverless machine learning process is executing; determine, based on a selection of the one or more second libraries, smart sampling of data to be used for the serverless machine learning process, wherein the smart sampling includes a selection of a portion of the data that is representative of an entirety of the data; and cause the execution of the serverless machine learning process by uploading a package that includes the one or more first libraries to the serverless FaaS, causing the one or more second libraries to be dynamically loaded, and using the portion of the data.

Various other aspects, features, and advantages of the invention will be apparent through the detailed description of the invention and the drawings attached hereto. It is also to be understood that both the foregoing general description and the following detailed description are examples and are not restrictive of the scope of the invention. As used in the specification and in the claims, the singular forms of "a," "an," and "the" include plural referents unless the context clearly dictates otherwise. In addition, as used in the specification and the claims, the term "or" means "and/or" unless the context clearly dictates otherwise. Additionally, as used in the specification, "a portion" refers to a part of, or the entirety of (i.e., the entire portion), a given item (e.g., data) unless the context clearly dictates otherwise.

### BRIEF DESCRIPTION OF THE DRAWINGS

FIG. 1 shows an illustrative diagram for execution of a serverless machine learning process in accordance with one or more embodiments.
FIG. 2 shows example code for generating a package that satisfies package characteristics for using a serverless service provided by a cloud computing platform.
FIG. 3 shows illustrative components for a system used to improve scalability of machine learning in accordance with one or more embodiments.
FIG. 4 shows a flowchart of the steps involved in improving scalability of machine learning in accordance with one or more embodiments.

### DETAILED DESCRIPTION OF THE DRAWINGS

In the following description, for the purposes of explanation, numerous specific details are set forth in order to provide a thorough understanding of the embodiments of the invention. It will be appreciated, however, by those having skill in the art that the embodiments of the invention may be practiced without these specific details or with an equivalent arrangement. In other cases, well-known structures and devices are shown in block diagram form in order to avoid unnecessarily obscuring the embodiments of the invention.

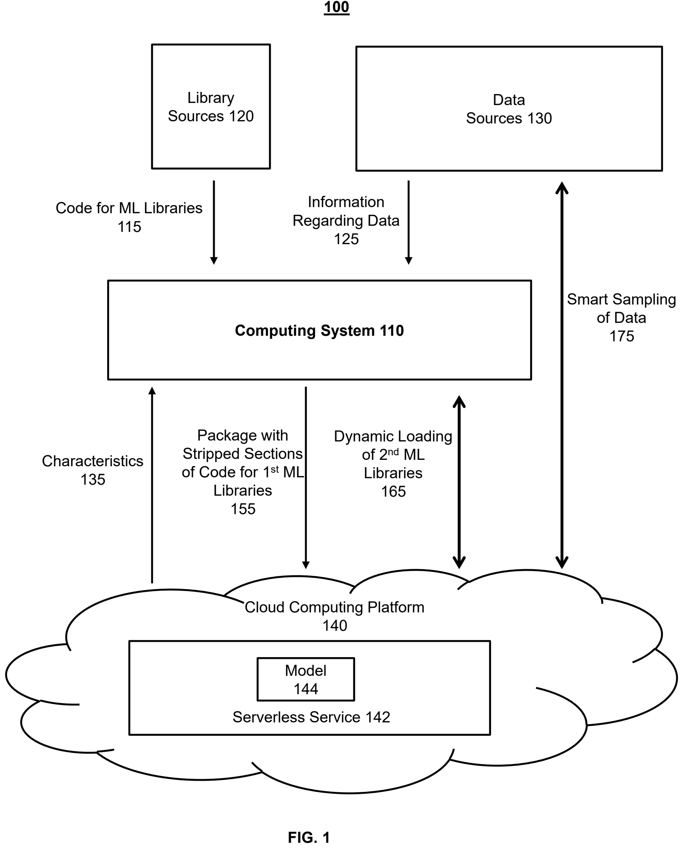

FIG. 1 shows an illustrative diagram 100 for execution of a serverless machine learning process in accordance with one or more embodiments. For example, computing system 100 may include one or more devices and/or system components for facilitating scalability of machine learning that requires large amounts of code that is above a particular threshold (e.g., more than 250 megabytes (mb) of unzipped code / 50 mb of zipped code).

For example, as shown in Fig. 1, computing system 110 may receive code 115 for one or more machine learning (ML) libraries (e.g., Prophet) from one or more library sources 120 (e.g., servers of Meta), receive information 125 regarding data from one or more data sources 130 (e.g., databases), and receive characteristics 135 from cloud computing platform 140 (e.g., Amazon Web Services (AWS)). Additionally, or alternatively, computing system 110 may determine at least some of characteristics 135 based on other information provided by cloud computing platform 140.

Cloud computing platform 140 may provide serverless service 142 to cause an execution of a serverless machine learning process by executing model 144 (e.g., a machine learning (ML) model). Serverless service 142 may include a serverless Function as a Service (FaaS) (e.g., Lambda).

Characteristics 135 may define requirements for using serverless service 142. For example, characteristics 135 may include a package characteristic that specifies a maximum zipped size for a zipped package that is directly uploaded to serverless service 142 (e.g., pre-uploaded before server service 142 executes model 144) and/or a package characteristic that specifies a maximum unzipped size of an unzipped package that is directly uploaded to serverless service 142. Additionally, or alternatively, characteristics 135 may specify a maximum runtime length (e.g., 15 minutes) for a ML model (e.g., model 144) to be executed by serverless service 142, a startup time (e.g., 5 seconds) for serverless service 142, and/or the impact of dynamic loading of one or more ML libraries (e.g., uploading of libraries during the execution of model 144) on runtime of a ML model (e.g., model 144).

As referred to herein, a serverless service may run code without the need to provision or manage servers. As indicated above, a serverless service may be provided by a cloud computing platform. The serverless service may include the FaaS, which provides on-demand functionality that enables supporting computing infrastructure to be utilized as needed without incurring charges when not needed. The serverless service may execute a machine learning model that is defined in a package.

As referred to herein, a package is a deployment package used to deploy code to a serverless service. The serverless service may use the package to execute functions. The package may include, for example, information necessary to execute a machine learning model (e.g., execute functions for the machine learning model). The information may include code and/or other information for one or more machine learning libraries that are necessary to execute the machine learning model, data that is necessary to train and/or simulate the machine learning model, and/or information regarding other resources that are necessary for the machine learning model. The information regarding the other resources may include references and/or links to dynamic libraries that may need to be uploaded before or during the execution of the machine learning model. The package may be created as a zipped file, as an unzipped file, and/or in a container image.

As referred to herein, a package characteristic may comprise any characteristic that distinguishes one package from another. In some embodiments, a package characteristic may comprise a size characteristic. The size characteristic may be based on a pre-uploaded size limit and/or the amount that can be dynamically uploaded, a runtime length of the model, and/or an effect of runtime based on increased dynamic upload. In some embodiments, a package characteristic may comprise a trigger characteristic. For example, the trigger characteristic may comprise predefined triggers that activate the machine learning process, such as API calls, file uploads, or database changes. In some embodiments, a package characteristic may comprise a resource utilization characteristic. The resource utilization characteristic may comprise memory requirements or CPU utilization requirements. For example, the memory requirements may specify a maximum amount of memory that can be used by the package or a particular portion of the package.

As referred to herein, a portion of a package may refer to less than an entirety of the package. For example, the portion of the package may be a single function of a package that includes multiple functions. In another example, the portion of the package may be code of one or more libraries of a package that includes code for multiple libraries. In another example, the portion of the package may be in one or more sections of code that are included in the code for one or more libraries. A portion of a section of code may include one or more strings of code within a line of code of the one or more lines of code or within multiple lines of code. The portion may include particular parts of code. The particular parts of code may include particular types of parts, parts with particular types of extensions, parts that include particular strings, and/or include particular types of code. For example, the particular types of parts may include shared objects, archived libraries, etc. For example, the particular types of extensions may include an .so extension for dynamically liked shared object libraries, an .a extension for static archived libraries, etc. For example, the particular strings may include one or more characters that identify a particular type of folders or a particular type of functions. The particular type of folders may include, for example, folders (e.g., _pychache_ folder) that include files with a particular type of extension (e.g., .pyc) and/or are used for a particular type of purpose (e.g., to store the compiled bytecode of imported modules). For example, the particular types of code may include bytecode, particular source code, etc.

Computing system 110 may generate package 155 based on characteristics 135. For example, computing system 110 may determine a library characteristic of the one or more ML libraries. For example, the library characteristic may be a library size for code 115 or a package that would include code 115.

Computing system 110 may compare a package characteristic of characteristics 135 to the library characteristic. For example, computing system 110 may determine that the library size is greater than the maximum zipped size or that the maximum unzipped size of code 115. Based on that, computing system 110 may select one or more sections of code 115 that corresponds to one or more first ML libraries, which are a subset of the ML libraries, and strip (e.g., remove) one or more portions from those one or more sections so that the zipped size of the one or more stripped sections (or a package that would include the one or more stripped sections) is less than or equal to the maximum zipped size and/or that the unzipped size of the one or more stripped sections (or a package that would include the one or more stripped sections) is less than or equal to the maximum zipped size. The removed one or more portions may include shared objects, metadata, and/or other information that is not used at runtime of model 144. Computing system 110 may identify the one or more portions to remove by weighing different types of the one or more potions based on how likely the different types will be needed to execute model 144 and based on the sizes of the one or more portions.

As referred to herein, a library characteristic may comprise any characteristic of one or more standalone libraries and/or one or more libraries as part of a package. In some embodiments, a library characteristic may comprise a library size characteristic. For example, the library size characteristic may be based on a total size of code that is included in one or more libraries and/or a total size of code that would need to be included in a package for the one or more libraries. In some embodiments, a library characteristic may comprise a library trigger characteristic. For example, the library trigger characteristic may comprise predefined triggers that activate the machine learning process, such as API calls, file uploads, or database changes. In some embodiments, a library characteristic may comprise a resource utilization characteristic. The resource utilization characteristic may comprise memory requirements or CPU utilization requirements. For example, the memory requirements may specify a minimum amount of memory that needs be used by the one or more libraries when the one or more libraries are included in a package.

Additionally, or alternatively, after stripping one portion of the one or more sections, computing system 110 may determine that the zipped size of code 115 (or a package that would include code 115) is still greater than the maximum zipped size or that the unzipped size of code 115 (or a package that would include code 115) is still greater than the maximum unzipped size. Based on that, computing system may remove one or more other portions of the one or more sections. Computing system 110 may repeat these steps until the zipped size of the one or more stripped sections (or a package that would include the one or more stripped sections) is less than or equal to the maximum zipped size and/or that the unzipped size of the one or more stripped sections (or a package that would include the one or more stripped sections) is less than or equal to the maximum zipped size.

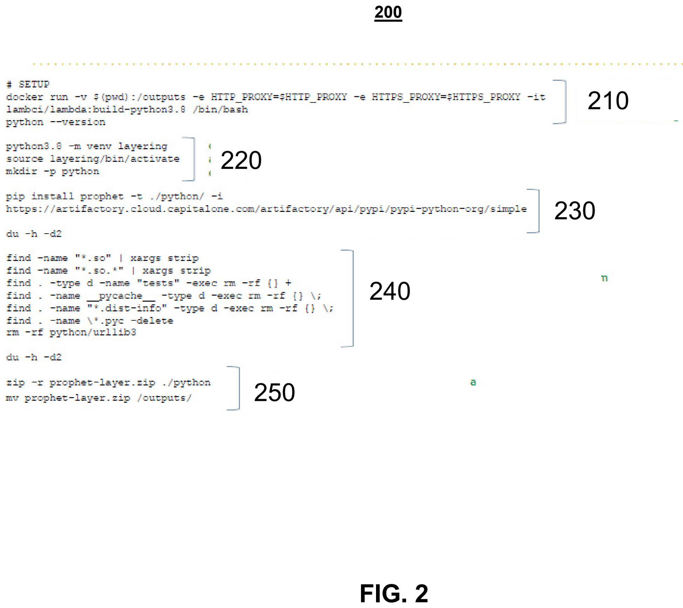

The identification and removal of the one or more portions is described further below with reference to Fig. 2.

The one or more portions that are stripped from the one or more sections of code 115 may, for example, not be necessary for serverless service 142 to execute machine learning model 144. Computing system 110 may determine that before stripping the one or more portions. After finishing stripping the one or more portions, computing system 110 may generate package 155 that includes the one or more stripped sections for the one or more first ML libraries.

Computing system 110 may further select one or more other ML libraries (e.g., one or more second ML libraries of the ML libraries corresponding to code 115) for dynamic loading 165 based on, for example, determining the one or more second ML libraries are necessary for serverless service 142 to finish executing machine learning model 144, cannot be included package 155 for direct uploading because of size limitations (e.g., a maximum size defined by characteristics 135), and that be dynamically uploaded to serverless service 142 while serverless service 142 is executing machine learning model 144. Computing system 110 may determine that the one or more second ML libraries can be dynamically loaded based on, for example, the maximum runtime length and/or the impact of dynamic loading specified by characteristics 135. Additionally, or alternatively, computing system 110 may make the above determinations for each individual ML library, of the one or more second ML libraries, based on characteristics 135 specifying the impact of dynamic loading for that individual ML library or the type of the ML library.

Additionally, or alternatively, computing system 110 may determine the one or more first ML libraries are to be included in package 155 and the one or more second ML libraries to be selected for dynamical loading 165 at the same time by identifying the optimal, overall outcome based on characteristics 135 and library characteristics of individual ML libraries.

Furthermore, computing system 110 may determine smart sampling of data 175 that is to be used by serverless service 142 to obtain input for model 144 while serverless service 142 is executing model 144. Computing system 1120 may determine smart sampling of data 175 based on information 125, characteristics 135 (e.g., the maximum runtime length, the startup time, and or the impact of dynamic loading), and the selection of the one or more second ML libraries. Smart sampling of data 175 may include a selection of a portion of data that is that is representative of the entirety of the data. Information 125 may include information regarding what is included in the data, timing information regarding collection of the data, and other information that indicates what sampling techniques of the data would be preferable to select the portion of the data that is that is representative of the entirety of the data. Smart sampling of data 175 may include one or more particular types of sampling, one or more particular amounts of sampling, and/or one or more preprocessing algorithms performed on the data prior to a selection of a portion of the data during the smart sampling of the data. The one or more particular types of sampling may include probability sampling and/or non-probability sampling. The probability sampling may include simple random sampling, systematic sampling, stratified sampling, and/or cluster sampling. The non-probability sampling includes convenience sampling, voluntary response sampling, purposive sampling, and/or snowball sampling. The one or more preprocessing algorithms may include, for example, using data filtering, data weighting, watermarks, and/or tokens in to the data based on trends, prior to the sampling.

Additionally, or alternatively, computing system 110 may determine that dynamic loading 165 of one or more (e.g., each) of the one or more second ML libraries needs to be offset by an increase in smart sampling 175 (e.g., selecting a smaller portion of the data to be representative of the entirety of the data) so that the maximum runtime length requirement specified by characteristics 135 and/or other specified objectives are met. For example, computing system 110 may determine that dynamic loading 165 of a first particular library, of the one or more second ML libraries, increases the runtime by a first amount of seconds and that dynamic loading 165 of a first particular library, of the one or more second ML libraries, increases the runtime by a second amount of seconds based on the impact of dynamic loading specified by characteristics 135. Computing system 110 may determine smart sampling of data 175 based on the increase in the first amount of seconds and the increaser of the second amount of seconds.

Additionally, or alternatively, computing system 110 may determine the one or more first ML libraries to be included in package 155, the one or more second ML libraries to be selected for dynamical loading 165, and smart sampling of data 175 at the same time by identifying the optimal, overall outcome based on information 125 and/or characteristics 135. For example, computing system 110 may balance a size of the one or more first ML libraries, a size of the one or more second ML libraries, and the impact of those sizes on the runtime of model 144 to determine the optimal outcome.

Additionally, or alternatively, computing system 110 may first determine characteristics of dynamic library loading (e.g., what can be loaded dynamically and/or how long dynamic loading will take) for serverless service 142 based on the identified one or more ML libraries, code 115, characteristics 135 (e.g., the maximum runtime length requirement), and/or information 125. Computing system 110 may determine to strip one or more portions from code 115 and/or determine smart sampling of data 175 based on the determined characteristics of dynamic library loading.

As shown in Fig. 1, computing system 110 may directly upload package 155 to serverless service 142 cause serverless service 142 to execute model 144. Serverless service 142 may execute model 144 by utilizing the one or more first ML libraries based on the stripped sections of code included in package 155.

While executing model 144, serverless service 142 may execute functions that require one or more particular libraries of the one or more second ML libraries. So, serverless service 142 may provide request(s) to computing system 110 and/or library sources 120 based on that. Computing system 110 and/or library sources 120 may dynamically load 165 those one or more particular libraries in response to the request(s). This may occur multiple times during the execution of model 144.

At the same time, while training model 144 during its execution, serverless service 142 may perform smart sampling of data 175 by sending request(s) for particular portion(s) of data to computing system 110 and/or data sources 130. Computing system 110 and/or data sources 130 may provide the particular portion(s) of data in response to the request(s). This may occur multiple times during the execution of model 144.

Additionally, or alternatively, computing system 110 may perform smart sampling of data 175 by providing, or causing data sources 130 to provide, the particular portion(s) of data to serverless service 142 in order for serverless service 142 to train model 144.

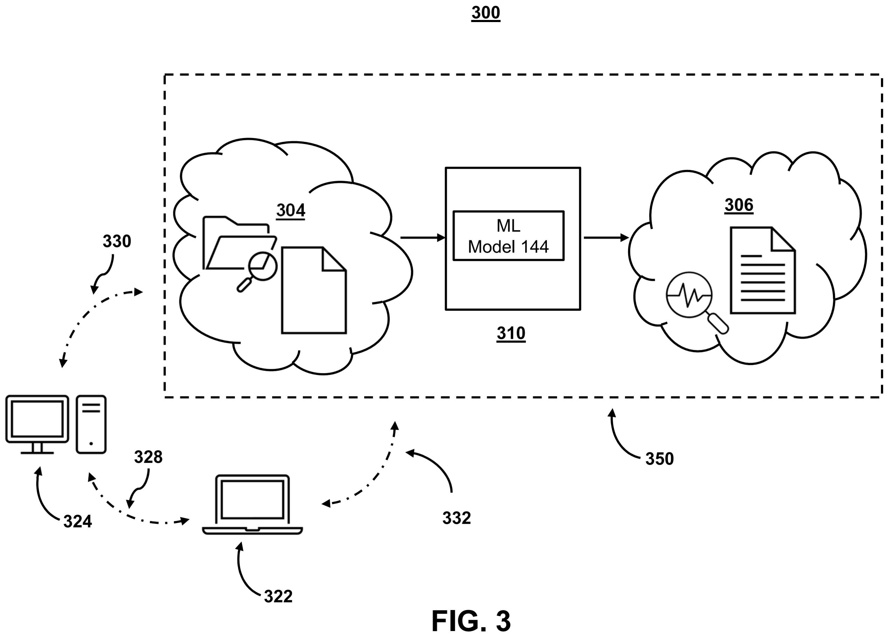

After training model 144, serverless service 142 may use model 144 to generate output based on new input, as described further below with regards to Fig. 3.

FIG. 2 shows example code 200 that computing system 110 may execute to generate package 155 in order to fit a machine learning library (i.e., Prophet in code 200) into serverless service 142 (i.e., Lambda in code 200). Code 200 may include section 210, section 220, section 230, section 240, and section 250. Section 210 may cause computing system 110 to execute a container (e.g., a Docker container) that is an image for a package of software that includes everything needed to run an application, set environmental variables for package 155, and specify a type (e.g., Lambda) of serverless service for which package 155 is generated.

Section 220 may cause computing system 110 to create a virtual environment using a particular programming language (e.g., Python 3.8), activate the virtual environment, and create an associated directory.

Section 230 may cause computing system 110 to install the machine learning library (i.e., Prophet in code 200) into the associated directory.

As mentioned above, section 240 may cause computing system 110 to remove portions of code that are not necessary for serverless service 142 to execute model 144. The first two lines of section 240 may cause computing system 110 to identify first parts (e.g., all shared objects) that include particular file extensions (e.g., .so) and strip particular portions (e.g., debugging commands) from those first parts. The next two lines of section 240 may cause computing system 110 to remove second parts (e.g., directories) with names that include particular strings (e.g., "tests" and/or "pycache"). The fifth line of section 240 may cause computing system 110 to remove third parts (e.g., directories) that include particular extensions (e.g., dist-info). The sixth line of section 240 may cause computing system 110 to remove fourth parts (e.g., pyc files that include compiled bytecode). The seventh line of section 240 may cause computing system 110 to remove libraries (e.g., urllib3) that are not necessary or redundant.

Section 250 may cause computing system 110 to zip package 155 in preparation for computing system 110 uploading package 155 to serverless service 142. Example code 200, alone or in combination with the techniques described above with reference to Fig. 1, may allow computing system 110 to use serverless machine learning with a ML library (e.g., Prophet) that exceeds the size limit of serverless service 142 in its original form by reducing the amount of code that is pre-uploaded to be below that size limit. As a result, computing system 110 may scale machine learning for ML models that rely on libraries that include large amounts of code that exceed the size limit of serverless service 142. Accordingly, the methods and systems improve the scalability of such machine learning for various use cases and applications discussed above, and reduce wasting processing and storage resources of dedicated, physical computer clusters that would be required if serverless machine learning was not possible.

FIG. 3 shows illustrative components for a system used to scale machine learning in accordance with one or more embodiments. For example, FIG. 3 may show illustrative components for computing system 110 and cloud computing platform 140. As shown in FIG. 3, system 300 may include mobile device 322 and/or user terminal 324. Computing system 110 may include device 322 and/or user terminal 324. While shown as a smartphone and personal computer, respectively, in FIG. 3, it should be noted that mobile device 322 and user terminal 324 may be any computing device, including, but not limited to, a laptop computer, a tablet computer, a hand-held computer, and other computer equipment (e.g., a server), including "smart," wireless, wearable, and/or mobile devices. FIG. 3 also includes cloud components 310, which may make up cloud computing platform 140. Cloud components 310 may alternatively be any computing device as described above, and may include any type of mobile terminal, fixed terminal, and/or other types of devices. For example, cloud components 310 may be implemented as a cloud computing system, and may feature one or more component devices. It should also be noted that system 300 is not limited to three devices. One or more devices of system 300 may interact with one another, one or more servers, or other components of system 300. It should be noted, that, while one or more operations are described herein as being performed by particular components of system 300, these operations may, in some embodiments, be performed by other components of system 300. As an example, while one or more operations are described herein as being performed by components of mobile device 322, these operations may, in some embodiments, be performed by components of cloud components 310. In some embodiments, the various computers and systems described herein may include one or more computing devices that are programmed to perform the described functions. Additionally, or alternatively, multiple users may interact with system 300 and/or one or more components of system 300. For example, in one embodiment, a first user and a second user may interact with system 300 using two different components.

With respect to the components of mobile device 322, user terminal 324, and cloud components 310, each of these devices may receive content and data via input/output (hereinafter "I/O") paths. Each of these devices may also include processors and/or control circuitry to send and receive commands, requests, and other suitable data using the I/O paths. The control circuitry may comprise any suitable processing, storage, and/or input/output circuitry. Each of these devices may also include a user input interface and/or user output interface (e.g., a display) for use in receiving and displaying data. For example, as shown in FIG. 3, both mobile device 322 and user terminal 324 include a display upon which to display data (e.g., conversational response, queries, and/or notifications).

Additionally, as mobile device 322 and user terminal 324 are shown as touchscreen smartphones, these displays also act as user input interfaces. It should be noted that in some embodiments, the devices may have neither user input interfaces nor displays, and may instead receive and display content using another device (e.g., a dedicated display device such as a computer screen, and/or a dedicated input device such as a remote control, mouse, voice input, etc.). Additionally, the devices in system 300 may run an application (or another suitable program). The application may cause the processors and/or control circuitry to perform operations related to generating dynamic conversational replies, queries, and/or notifications.

Each of these devices may also include electronic storages. The electronic storages may include non-transitory storage media that electronically stores information. The electronic storage media of the electronic storages may include one or both of (i) system storage that is provided integrally (e.g., substantially non-removable) with servers or client devices, or (ii) removable storage that is removably connectable to the servers or client devices via, for example, a port (e.g., a USB port, a firewire port, etc.) or a drive (e.g., a disk drive, etc.). The electronic storages may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. The electronic storages may include one or more virtual storage resources (e.g., cloud storage, a virtual private network, and/or other virtual storage resources). The electronic storages may store software algorithms, information determined by the processors, information obtained from servers, information obtained from client devices, or other information that enables the functionality as described herein.

FIG. 3 also includes communication paths 328, 330, and 332. Communication paths 328, 330, and 332 may include the Internet, a mobile phone network, a mobile voice or data network (e.g., a 5G or LTE network), a cable network, a public switched telephone network, or other types of communications networks or combinations of communications networks. Communication paths 328, 330, and 332 may separately or together include one or more communications paths, such as a satellite path, a fiber-optic path, a cable path, a path that supports Internet communications (e.g., IPTV), free-space connections (e.g., for broadcast or other wireless signals), or any other suitable wired or wireless communications path or combination of such paths. The computing devices may include additional communication paths linking a plurality of hardware, software, and/or firmware components operating together. For example, the computing devices may be implemented by a cloud of computing platforms operating together as the computing devices.

Each cloud component 310 may provide serverless service 142. Cloud components 310 may access data sources 130 while executing (e.g., training) model 144.

Cloud components 310 may include model 144, which may be an artificial intelligence model. model 144 may take inputs 304 and provide outputs 306. The inputs may include multiple datasets, such as a training dataset and a test dataset. At least a portion of the training dataset may be from data sources 130 and be provided via smart sampling of data 175. Each of the plurality of datasets (e.g., inputs 304) may include data subsets related to predicted forecasts and/or errors and/or actual forecasts and/or errors. In some embodiments, outputs 306 may be fed back to model 144 as input to train model 144 (e.g., alone or in conjunction with user indications of the accuracy of outputs 306, labels associated with the inputs, or with other reference feedback information). For example, the system may receive a first labeled feature input, wherein the first labeled feature input is labeled with a known prediction for the first labeled feature input.

In a variety of embodiments, model 144 may update its configurations (e.g., weights, biases, or other parameters) based on the assessment of its prediction (e.g., outputs 306) and reference feedback information (e.g., user indication of accuracy, reference labels, or other information). In a variety of embodiments, where model 144 is a neural network, connection weights may be adjusted to reconcile differences between the neural network's prediction and reference feedback. In a further use case, one or more neurons (or nodes) of the neural network may require that their respective errors are sent backward through the neural network to facilitate the update process (e.g., backpropagation of error). Updates to the connection weights may, for example, be reflective of the magnitude of error propagated backward after a forward pass has been completed. In this way, for example, the model 144 may be trained to generate better predictions.

In some embodiments, model 144 may include an artificial neural network. In such embodiments, model 144 may include an input layer and one or more hidden layers. Each neural unit of model 144 may be connected with many other neural units of model 144. Such connections can be enforcing or inhibitory in their effect on the activation state of connected neural units. In some embodiments, each individual neural unit may have a summation function that combines the values of all of its inputs. In some embodiments, each connection (or the neural unit itself) may have a threshold function such that the signal must surpass it before it propagates to other neural units. model 144 may be self-learning and trained, rather than explicitly programmed, and can perform significantly better in certain areas of problem solving, as compared to traditional computer programs. During training, an output layer of model 144 may correspond to a classification of model 144, and an input known to correspond to that classification may be input into an input layer of model 144 during training. During testing, an input without a known classification may be input into the input layer, and a determined classification may be output.

System 300 also includes API layer 350. API layer 350 may allow the system to generate summaries across different devices. In some embodiments, API layer 350 may be implemented on mobile device 322 or user terminal 324. Alternatively or additionally, API layer 350 may reside on one or more of cloud components 310. API layer 350 (which may be A REST or Web services API layer) may provide a decoupled interface to data and/or functionality of one or more applications. API layer 350 may provide a common, language-agnostic way of interacting with an application. Web services APIs offer a well-defined contract, called WSDL, that describes the services in terms of its operations and the data types used to exchange information. REST APIs do not typically have this contract; instead, they are documented with client libraries for most common languages, including Ruby, Java, PHP, and JavaScript. SOAP Web services have traditionally been adopted in the enterprise for publishing internal services, as well as for exchanging information with partners in B2B transactions.

API layer 350 may use various architectural arrangements. For example, system 300 may be partially based on API layer 350, such that there is strong adoption of SOAP and RESTful Web-services, using resources like Service Repository and Developer Portal, but with low governance, standardization, and separation of concerns. Alternatively, system 300 may be fully based on API layer 350, such that separation of concerns between layers like API layer 350, services, and applications are in place.

In some embodiments, the system architecture may use a microservice approach. Such systems may use two types of layers: Front-End Layer and Back-End Layer where microservices reside. In this kind of architecture, the role of the API layer 350 may provide integration between Front-End and Back-End. In such cases, API layer 350 may use RESTful APIs (exposition to front-end or even communication between microservices). API layer 350 may use AMQP (e.g., Kafka, RabbitMQ, etc.). API layer 350 may use incipient usage of new communications protocols such as gRPC, Thrift, etc.

In some embodiments, the system architecture may use an open API approach. In such cases, API layer 350 may use commercial or open source API Platforms and their modules. API layer 350 may use a developer portal. API layer 350 may use strong security constraints applying WAF and DDoS protection, and API layer 350 may use RESTful APIs as standard for external integration.

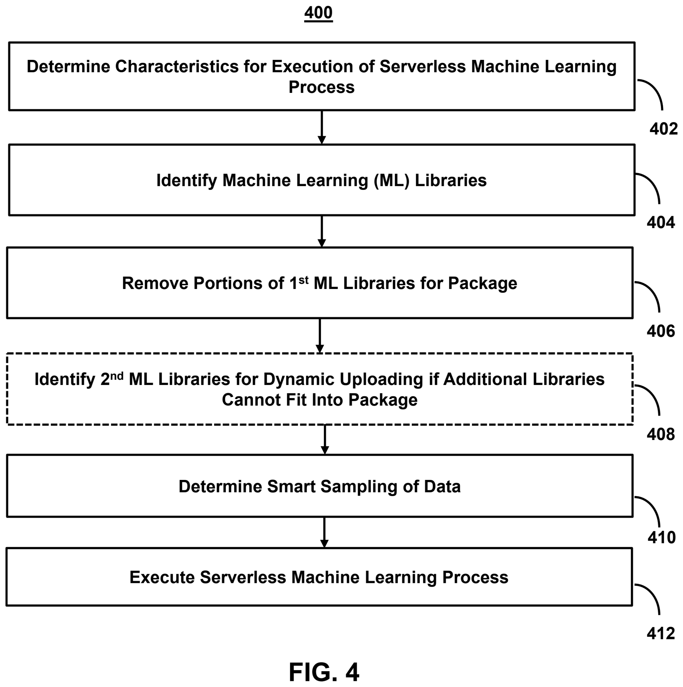

FIG. 4 shows a flowchart of the steps involved in improving scalability of machine learning, in accordance with one or more embodiments. For example, the system may use process 400 (e.g., as implemented on one or more system components described above) in order to be able to use serverless machine learning for models that rely on libraries of code that exceed size limits of serverless services provided by cloud computing platforms.

At step 402, process 400 (e.g., using one or more components described above) may include determining characteristics for the execution of the serverless machine learning process. For example, computing system 110 may receive characteristics 135 from cloud computing platform 140 that provides serverless service 142 for execution of model 144. For example, characteristics 135 specify a maximum zipped size of code allowed to be directly uploaded to cloud computing platform 140. In some embodiments, computing system 110 determining the characteristics may include determining a maximum size of code allowed to be directly uploaded, as package 155, to serverless service 142. By doing so, computing system 110 may know the requirements that it needs to comply with in order to utilize serverless service 142 for execution of model 144.

At step 404, process 400 (e.g., using one or more components described above) may include identifying ML libraries. For example, computing system 110 may identify ML libraries that are to be used for an execution of model 144 using serverless service 142 provided by cloud computing platform 142. By doing so, computing system 110 may obtain code 115 for the identified ML libraries from library sources 120 and then, as described further below, provide a reduced portion of code 115 in package 155 so that serverless service 142 can still be used to execute model 144 even though original code 115 exceeds the size limit of serverless service 142.

At step 406, process 400 (e.g., using one or more components described above) may include removing portions of code of one or more first libraries of the ML libraries. For example, computing system 110 may determine that a first library, of the one or more first libraries of the ML libraries, or a stripped version of the first library can be included in package 155 without exceeding the size limit allowed by serverless service 142. Based on determining that the first library or the stripped version of the first library can be included in package 155, computing system 110 may determine to add the first library to package 115. To do so, computing system 110 may generate the stripped version of the first library by identifying one or more portions, of the first library that are not required during a runtime of the serverless machine learning process and remove at least a subset of the one or more portions, of the first library, based on a comparison of the package characteristic and library characteristics of the first library or all of the one or more first libraries. After that, computing system 110 may add the stripped version of the first library to package 115.

Computing system 110 may then determine that a second library, of the one or more first libraries of the ML libraries, or a stripped version of the second library can be included in package 155 without exceeding the size limit allowed by serverless service 142. Based on determining that the second library or the stripped version of the second library can be included in package 155, computing system 110 may determine to add the second library to package 115. To do so, computing system 110 may generate the stripped version of the second library by identifying one or more portions, of the second library that are not required during the runtime of the serverless machine learning process and remove at least a subset of the one or more portions, of the second library, based on a comparison of the package characteristic and library characteristics of the second library or all of the one or more first libraries. After that, computing system 110 may add the stripped version of the second library to package 115.

In some implementations, computing system 110 may keep adding each of the one or more first libraries to package 115 in this manner until computer system 110 determines that another library of the ML libraries cannot be added to package 115 without exceeding the size limit allowed by serverless service 142.

Additionally, or alternatively, computing system 110 may determine at one time that a plurality of first libraries, of the one or more first libraries, or a stripped version of the plurality of first libraries, can be included in package 155 without exceeding the size limit allowed by serverless service 142. Based on that, computing system 110 may determine to add the plurality of first libraries to package 115. To do so, computing system 110 may generate the stripped version of the plurality of first libraries by identifying one or more portions, of the plurality of first libraries that are not required during the runtime of the serverless machine learning process and remove at least a subset of the one or more portions, of the plurality of first libraries, based on a comparison of the package characteristic and library characteristics of the plurality of first libraries. After that, computing system 110 may add the stripped version of the plurality of first libraries to package 115.

Computing system 110 may generate package 155 that includes the one or more first libraries after at least the subset of the one or more portions is removed from individual libraries of the one or more first libraries and/or from multiple groups of libraries of the one or more first libraries. By doing so, computing system 110 reduces the size of code included in package 155 that is to be pre-uploaded to serverless service 142 below the size limit allowed by serverless service 142. This allows the use of serverless service 142 to execute model 144 even though it requires ML libraires that exceed the size limit of serverless service 142 in their original form.

At step 408, process 400 (e.g., using one or more components described above) may include identifying one or more second libraries, of the ML libraries, for dynamic uploading if additional libraries cannot fit into package 155. For example, computing system 110 may determine that adding another library of the ML libraries (e.g., any other library of the ML libraries or a particular library of the one or more second libraries) to package 115 would exceed the size limit allowed by serverless service 142. Based on that, computing system 110 may determine that no additional library can be included in package 155. Based on determining that no additional library can be included in package 155, computing system 110 may determine that all other libraries of the ML libraries (e.g., the one or more second libraries) are to be dynamically loaded while the serverless machine learning process is executing. By doing so, computing system 110 does not need to pre-upload those one or more second libraries as part of package 155. This allows the use of serverless service 142 to execute model 144 even though a total size of the one or more second libraries that are selected for dynamic uploading and the one or more first libraries that are included in package 155 exceeds the size limit of serverless service 142.

At step 410, process 400 (e.g., using one or more components described above) may include determining smart sampling of data. For example, computing system 110 may determine, based on a selection of the one or more second libraries, smart sampling of data to be used for the serverless machine learning process. The smart sampling may include a selection of a portion of the data that is representative of an entirety of the data. By doing so, computing system 110 may compensate for the impact of dynamic uploading of the one or more second libraries on the runtime. This allows the use of serverless service 142 to execute model 144 without exceeding the runtime limit of serverless service 142.

At step 412, process 400 (e.g., using one or more components described above) may include executing a serverless machine learning process. For example, computing system 110 may cause the execution of the serverless machine learning process by uploading package 155 serverless service 142 prior to the execution of model 144, causing the one or more second libraries to be dynamically loaded to serverless service 142 during the execution of model 144, and using the portion of the data that is selected using the smart sampling of data. By doing so, computing system 110 may use serverless service 142 to execute model 144 even though a total size of the one or more first libraries included in package 155 and the one or more second libraries that are dynamically uploaded exceeds the size limit of serverless service 142.

It is contemplated that the steps or descriptions of FIG. 4 may be used with any other embodiment of this disclosure. In addition, the steps and descriptions described in relation to FIG. 4 may be done in alternative orders or in parallel to further the purposes of this disclosure. For example, each of these steps may be performed in any order, in parallel, or simultaneously to reduce lag or increase the speed of the system or method. Furthermore, it should be noted that any of the components, devices, or equipment discussed in relation to the figures above could be used to perform one or more of the steps in FIG. 4.

The above-described embodiments of the present disclosure are presented for purposes of illustration and not of limitation, and the present disclosure is limited only by the claims which follow. Furthermore, it should be noted that the features and limitations described in any one embodiment may be applied to any embodiment herein, and flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

The present techniques will be better understood with reference to the following enumerated embodiments:
1. A method, the method comprising: determining a package characteristic for the execution of the serverless machine learning process using the serverless service; identifying one or more libraries, of a plurality of machine learning libraries, that are to be used for the serverless machine learning process; determining a library characteristic of the one or more libraries; determining one or more portions, of the one or more libraries, that are not required during a runtime of the serverless machine learning process; removing, based on a comparison that is based on the package characteristic and the library characteristic, at least a subset of the one or more portions, of the one or more libraries, that are not required during the runtime of the serverless machine learning process; generating a package that includes the one or more libraries after at least the subset of the one or more portions is removed from the one or more libraries; and causing the execution of the serverless machine learning process by uploading the package to a serverless Function as a Service (FaaS) provided by a cloud computing platform.
2. The method of any one of the preceding embodiments, wherein determining the package characteristic comprises: determining a maximum size of code allowed to be directly uploaded, as the package, to the serverless FaaS, wherein determining the library characteristic comprises: determining a size of code of the one or more libraries, and wherein the comparison includes: determining that the size of code of the one or more libraries is greater than the maximum size of code allowed to be directly uploaded to the serverless FaaS, wherein removing at least the subset of the one or more portions comprises: removing at least the subset of the one or more portions from the one or more libraries based on determining that the size of code of the one or more libraries is greater than the maximum size of code.
3. The method of any one of the preceding embodiments, determining, after at least the subset of the one or more portions are removed from the one or more libraries, a size of code based on the one or more libraries and one or more other libraries of the plurality of machine learning libraries; determining that the size of code is greater than a maximum size of code allowed to be directly uploaded to the serverless FaaS; and selecting, based on determining that the size of code is greater than the maximum size of code allowed to be directly uploaded to the serverless FaaS, one or more particular libraries, of the one or more other libraries, that are to be dynamically loaded while the serverless machine learning process is executing.
4. The method of any one of the preceding embodiments, wherein the plurality of machine learning libraries include one or more first libraries and one or more second libraries, wherein the one or more libraries are the one or more first libraries, wherein identifying the one or more libraries comprises: determining to pre-load the one or more first libraries.
5. The method of any one of the preceding embodiments, wherein determining to pre-load the one or more first libraries comprises: determining to pre-load the one or more first libraries based on sizes of the plurality of machine learning libraries and impact of dynamically loading one or more of the one or more first libraries or the one or more second libraries on runtime.
6. The method of any one of the preceding embodiments, further comprising: determining to dynamically load the one or more second libraries while the serverless machine learning process is executing.
7. The method of any one of the preceding embodiments, wherein determining to dynamically load the one or more second libraries comprises: determining to dynamically load the one or more second libraries based on one or more of sizes of the one or more second libraries or runtime impact of dynamically loading the one or more second libraries.
8. The method of any one of the preceding embodiments, further comprising: determining smart sampling of data to be used for the serverless machine learning process based on one or more characteristics of one or more of the data or one or more other libraries, of the plurality of machine learning libraries, that are to be dynamically loaded; and performing the smart sampling of the data for the execution of the serverless machine learning process.
9. The method of any one of the preceding embodiments, wherein the smart sampling of the data includes one or more of: one or more particular types of sampling, one or more particular amounts of sampling, or one or more preprocessing algorithms performed on the data prior to a selection of a portion of the data during the smart sampling of the data.
10. The method of any one of the preceding embodiments, wherein determining the one or more portions that are not required during the runtime of the serverless machine learning process comprises: determining that the one or more portions are not required for the serverless machine learning process to be executed using the serverless FaaS.
11. The method of any one of the preceding embodiments, wherein the one or more portions include: a first portion of a particular type, and a second portion of the particular type, wherein removing at least the subset of the one or more portions from the one or more libraries comprises: removing the first portion from a first library of the one or more libraries, and removing the second portion from a second library of the one or more libraries.
12. The method of any one of the preceding embodiments, further comprising: determining, after at least the subset of the one or more portions are removed from the one or more libraries, a size of code based on the one or more libraries; determining that the size of code is greater than a maximum size of code allowed to be directly uploaded to the serverless FaaS; and removing, based on determining that the size of code is greater than the maximum size of code allowed to be directly uploaded to the serverless FaaS, one or more other portions of the one or more libraries.
13. The method of any one of the preceding embodiments, wherein removing at least the subset of the one or more portions from the one or more libraries comprises: identifying all shared objects of a library of the one or more libraries, and removing debugging commands from the shared objects, wherein the subset of the one or more portions include the debugging commands.
14. The method of any one of the preceding embodiments, wherein removing the one or more portions from the one or more libraries comprises: identifying directories, of a library of the one or more libraries, with names that include a particular string, and removing the directories from the library, wherein the subset of the one or more portions includes the directories.
15. The method of any one of the preceding embodiments, wherein removing the one or more portions from the one or more libraries comprises: identifying directories, of a library of the one or more libraries, with a particular extension, and removing the directories from the library, wherein the subset of the one or more portions includes the directories.
16. The method of any one of the preceding embodiments, wherein removing the one or more portions from the one or more libraries comprises: identifying a first type of directories of a library of the one or more libraries, identifying a second type of directories of the library, and removing the first type of directories and the second type of directories from the library, wherein the subset of the one or more portions includes the first type of directories and the second type of directories.
17. One or more non-transitory, computer-readable mediums storing instructions that, when executed by a data processing apparatus, cause the data processing apparatus to perform operations comprising those of any of embodiments 1-15.
18. A system comprising one or more processors; and memory storing instructions that, when executed by the processors, cause the processors to effectuate operations comprising those of any of embodiments 1-15.
19. A system comprising means for performing any of embodiments 1-15.

## Claims

1. A system for improving scalability of machine learning, the system comprising:
one or more memories; and
one or more processors, coupled to the one or more processors, configured to cause the system to:
identify a plurality of machine learning libraries that are to be used for an execution of a serverless machine learning process using a serverless Function as a Service (FaaS) provided by a cloud computing platform,
wherein a zipped size of code of the plurality of machine learning libraries is greater than a maximum zipped size of code allowed to be directly uploaded to the serverless FaaS;
remove, based on the zipped size of code of the plurality of machine learning libraries being greater than the maximum zipped size, a plurality of portions of one or more first libraries, of the plurality of machine learning libraries, that are to be pre-loaded into the serverless FaaS,
wherein the plurality of portions are not necessary for the execution of the serverless machine learning process;
select, based on the zipped size of code of the plurality of machine learning libraries being greater than the maximum zipped size, one or more second libraries, of the plurality of machine learning libraries, that are to be dynamically loaded while the serverless machine learning process is executing;
determine, based on a selection of the one or more second libraries, smart sampling of data to be used for the serverless machine learning process,
wherein the smart sampling includes a selection of a portion of the data that is representative of an entirety of the data; and
cause the execution of the serverless machine learning process by uploading a package that includes the one or more first libraries to the serverless FaaS, causing the one or more second libraries to be dynamically loaded, and using the portion of the data.

2. A method for using a serverless service for an execution of a serverless machine learning process, the method comprising:
determining a package characteristic for the execution of the serverless machine learning process using the serverless service;
identifying one or more libraries, of a plurality of machine learning libraries, that are to be used for the serverless machine learning process;
determining a library characteristic of the one or more libraries;
determining one or more portions, of the one or more libraries, that are not required during a runtime of the serverless machine learning process;
removing, based on a comparison that is based on the package characteristic and the library characteristic, at least a subset of the one or more portions, of the one or more libraries, that are not required during the runtime of the serverless machine learning process;
generating a package that includes the one or more libraries after at least the subset of the one or more portions is removed from the one or more libraries; and
causing the execution of the serverless machine learning process by uploading the package to a serverless Function as a Service (FaaS) provided by a cloud computing platform.

3. The method of claim 2,
wherein determining the package characteristic comprises:
determining a maximum size of code allowed to be directly uploaded, as the package, to the serverless FaaS,
wherein determining the library characteristic comprises:
determining a size of code of the one or more libraries, and
wherein the comparison includes:
determining that the size of code of the one or more libraries is greater than the maximum size of code allowed to be directly uploaded to the serverless FaaS, wherein removing at least the subset of the one or more portions comprises:
removing at least the subset of the one or more portions from the one or more libraries based on determining that the size of code of the one or more libraries is greater than the maximum size of code.

4. The method of claim 2 or 3, further comprising:
determining, after at least the subset of the one or more portions are removed from the one or more libraries, a size of code based on the one or more libraries and one or more other libraries of the plurality of machine learning libraries;
determining that the size of code is greater than a maximum size of code allowed to be directly uploaded to the serverless FaaS; and
selecting, based on determining that the size of code is greater than the maximum size of code allowed to be directly uploaded to the serverless FaaS, one or more particular libraries, of the one or more other libraries, that are to be dynamically loaded while the serverless machine learning process is executing.

5. The method of any one of claims 2 to 4,
wherein the plurality of machine learning libraries include one or more first libraries and one or more second libraries,
wherein the one or more libraries are the one or more first libraries,
wherein identifying the one or more libraries comprises:
determining to pre-load the one or more first libraries.

6. The method of claim 5, wherein one or more of:
(a) determining to pre-load the one or more first libraries comprises determining to pre-load the one or more first libraries based on sizes of the plurality of machine learning libraries and impact of dynamically loading one or more of the one or more first libraries or the one or more second libraries on runtime; and/or
(b) the method further comprises determining to dynamically load the one or more second libraries while the serverless machine learning process is executing; and/or
(c) determining to dynamically load the one or more second libraries comprises determining to dynamically load the one or more second libraries based on one or more of sizes of the one or more second libraries or runtime impact of dynamically loading the one or more second libraries.

7. The method of any one of claims 2 to 6, further comprising:
determining smart sampling of data to be used for the serverless machine learning process based on one or more characteristics of one or more of the data or one or more other libraries, of the plurality of machine learning libraries, that are to be dynamically loaded; and
performing the smart sampling of the data for the execution of the serverless machine learning process.
wherein, optionally, the smart sampling of the data includes one or more of:
one or more particular types of sampling,
one or more particular amounts of sampling, or
one or more preprocessing algorithms performed on the data prior to a selection of a portion of the data during the smart sampling of the data.

8. The method of any one of claims 2 to 7, wherein determining the one or more portions that are not required during the runtime of the serverless machine learning process comprises:
determining that the one or more portions are not required for the serverless machine learning process to be executed using the serverless FaaS.

9. The method of any one of claims 2 to 8,
wherein the one or more portions include:
a first portion of a particular type, and
a second portion of the particular type, and
wherein removing at least the subset of the one or more portions from the one or more libraries comprises:
removing the first portion from a first library of the one or more libraries, and
removing the second portion from a second library of the one or more libraries.

10. The method of any one of claims 2 to 9, further comprising:
determining, after at least the subset of the one or more portions are removed from the one or more libraries, a size of code based on the one or more libraries;
determining that the size of code is greater than a maximum size of code allowed to be directly uploaded to the serverless FaaS; and
removing, based on determining that the size of code is greater than the maximum size of code allowed to be directly uploaded to the serverless FaaS, one or more other portions of the one or more libraries.

11. The method of any one of claims 2 to 10, wherein removing at least the subset of the one or more portions from the one or more libraries comprises:
identifying all shared objects of a library of the one or more libraries, and
removing debugging commands from the shared objects,
wherein the subset of the one or more portions include the debugging commands.

12. The method of any one of claims 2 to 11, wherein removing the one or more portions from the one or more libraries comprises one or more of:
(a) identifying directories, of a library of the one or more libraries, with names that include a particular string, and removing the directories from the library, wherein the subset of the one or more portions includes the directories; and/or
(b) identifying directories, of a library of the one or more libraries, with a particular extension, and removing the directories from the library, wherein the subset of the one or more portions includes the directories; and/or
(c) identifying a first type of directories of a library of the one or more libraries, identifying a second type of directories of the library, and removing the first type of directories and the second type of directories from the library, wherein the subset of the one or more portions includes the first type of directories and the second type of directories.

13. One or more non-transitory media comprising instructions, that when executed by one or more processors of a system, cause the system to perform operations comprising:
identifying one or more libraries of a plurality of machine learning libraries that are to be used for a serverless machine learning process;
removing one or more portions from the one or more libraries;
generating a package that includes the one or more libraries after the one or more portions are removed from the one or more libraries; and
causing an execution of the serverless machine learning process by uploading the package.

14. The one or more non-transitory media of claim 13, wherein, before the one or more portions are removed, a zipped size of code of the plurality of machine learning libraries is greater than a maximum zipped size of code allowed to be directly uploaded to a serverless service.

15. The one or more non-transitory media of claim 13 or 14, wherein the one or more portions include debugging commands and particular types of directories.
